# EUROPÄISCHE PATENTSCHRIFT

(11) **EP 1 784 450 B1**
(45) Veröffentlichungstag und Bekanntmachung des Hinweises auf die Patenterteilung: **15.07.2009**
(21) Anmeldenummer: 05774324.7
(22) Anmeldetag: 16.08.2005
(51) Int. Cl.: C08K 5/3415, C09B 67/22, C09B 57/00

(54) **VERFAHREN UM VERZUGSFREIEN PIGMENTIEREN VON TEILKRISTALLINEN KUNSTSTOFFEN**
METHOD FOR UNDISTORTED PIGMENTATION OF PARTIALLY CRYSTALLINE PLASTICS
PROCEDE POUR PIGMENTER SANS DEFORMATION DES MATIERES PLASTIQUES SEMI-CRISTALLINES

(30) Priorität: 18.08.2004 DE 102004039954
(43) Veröffentlichungstag der Anmeldung: 16.05.2007
(73) Patentinhaber: Clariant Produkte (Deutschland) GmbH, 65929 Frankfurt am Main (DE)
(72) Erfinder: GANSCHOW, Matthias, 65195 Wiesbaden (DE); WEBER, Joachim, CH-4153 Reinach (CH)
(74) Vertreter: Hütter, Klaus
(86) Internationale Anmeldenummer: PCT/EP2005/008872
(87) Internationale Veröffentlichungsnummer: WO 2006/018271

(56) Entgegenhaltungen:
- EP-A- 0 748 851
- EP-A- 0 952 183
- WO-A-20/04018566

## Beschreibung

Die Erfindung betrifft die Verwendung bestimmter Diketopyrrolo[3,4c]pyrrol-Additive als Zusätze bei der Pigmentierung teilkristalliner Kunststoffe.

Bei der Einfärbung von teilkristallinen Kunststoffen mit organischen Pigmenten treten häufig Störungen im Material auf, die als Verzugserscheinungen bezeichnet werden. Die Pigmentierung großvolumiger Spritzgussteile, insbesondere solcher aus Polyethylen, führt zu Verformungen, Schrumpfungen und Rissbildungen (innere Spannungen), die je nach Anwendungsgebiet die eingefärbten Artikel unbrauchbar machen. Beispielsweise ist bei Flaschenkästen aufgrund von Deformation mit dem Verlust der Stapelbarkeit zu rechnen.

Diese Nachteile beziehen sich auf die Mehrzahl organischer Pigmente, während sich die anorganischen Pigmente und eine Minderzahl von organischen Pigmenten neutral verhalten. Es wird angenommen, dass Pigmente bei der Erstarrung der Polymerschmelze als Nukleierungszentren wirken und so zu einem zum Verzug neigenden Polymer führen.

Neben Verzugsfreiheit werden bei der Verwendung von Pigmenten zum Färben von Kunststoffen hohe Anforderungen an die anwendungstechnischen Eigenschaften der Pigmente gestellt, wie gute Dispergierbarkeit, hohe Farbstärke, reine Farbtöne von hohem Chroma, hohe Temperaturechtheit, gute Ausblutechtheit und gute Licht- und Wetterechtheiten. Wünschenswert ist außerdem, wenn sich die Einsetzbarkeit der Pigmente nicht auf ein System beschränkt, sondern eine möglichst universelle Einsetzbarkeit gegeben ist. So sollen die Pigmente auch für nicht teilkristalline Kunststoffe und auch zum Färben von anderen hochmolekularen organischen Materialien geeignet sein, und beispielsweise auch in Lack- oder Drucksystemen eingesetzt werden können, wo noch andere Anforderungen gestellt werden, wie beispielsweise niedrige Viskosität der Anreibungsformulierungen oder der fertigen Druck- und Lackfarben, gute Flockungsstabilität, Lösemittel- und Überlackierechtheiten, hoher Glanz, im Falle von Metalliclackierungen hohe Transparenz.

Es sind bereits verschiedene Methoden vorgeschlagen worden, um dem Verzugsproblem entgegenzuwirken. Zu verzugsfreien Pigmenten gelangt man beispielsweise gemäß EP 0 952 183 A1 und WO 2004/018566 durch Einsatz von langkettig substituierten Diketopyrrolopyrrolen.

EP 0 748 852 A2 offenbart DPP-Zubereitungen mit einem Cyan-substituiertem DPP-Additiv.

Diese Methoden genügen jedoch nicht immer den heutigen Anforderungen an die oben beschriebenen anwendungstechnischen Eigenschaften. Es bestand die Aufgabe, neue Wege zum verzugsfreien Einfärben von teilkristallinen Kunststoffen mit Diketopyrrolopyrrolpigmenten zu finden.
Es wurde gefunden, dass die Aufgabe überraschenderweise durch eine nachstehend beschriebene Pigmentzubereitung gelöst wird.

Gegenstand der Erfindung ist Verfahren zur Färbung von teilkristallinen Kunststoffen in der Masse, dadurch gekennzeichnet, dass
(i) ein teilkristalliner Kunststoff aus der Gruppe der Homopolymere, Terpolymere oder Copolymere von Ethylen, Propylen, Butylen, Styrol und/oder Divinylbenzol, der Polyester, der Polyamide und der thermoplastischen lonomere;
(ii) ein Pigment aus der Gruppe der Diketopyrrolopyrrol-, Chinacridon-, Disazokondensations-, Isoindolinon- und Isoindolin-Pigmente; und
(iii) 0,001 bis 0,25 Gewichtsteile, bezogen auf ein Gewichtsteil Pigment, eines Additivs der Formel (I)

   Q⁅R]ₛ (I)

   geformt werden,
worin
Q ein Rest einer Diketopyrrolopyrrolverbindung der Formel (Ia) ist, 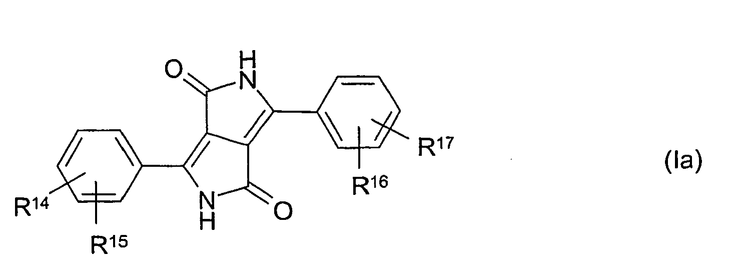 worin R¹⁴ , R¹⁵, R¹⁶ und R¹⁷ unabhängig voneinander Wasserstoff, Halogen, wie beispielsweise Chlor oder Brom, C₁-C₄-Alkyl, wie beispielsweise Methyl, Ethyl oder tert.-Butyl, C₁-C₄-Alkoxy, wie beispielsweise Methoxy, oder Cyano bedeuten;
s eine Zahl von 0,1 bis 4,0 darstellt; und
R ein Rest der Formeln -CONZ¹Z², -NZ¹Z² oder -COOZ³ bedeutet,
worin
Z¹ und Z² gleich oder verschieden sind und Wasserstoff oder C₁-C₃₀-Alkyl- oder C₂-C₃₀-Alkenyl-Reste bedeuten, die linear oder verzweigt und unsubstituiert oder durch Halogen, Hydroxy, Hydroxycarbonyl, C₄-C₁₅-Cycloalky oder C₁-C₁₅-Alkoxy substituiert sind, wobei der Alkenylrest ein- oder mehrfach ungesättigt sein kann, mit der Maßgabe, dass Z¹ und Z² nicht gleichzeitig Wasserstoff bedeuten,
Z³ Wasserstoff, Ammonium, Alkylammonium, Alkalimetall, C₁-C₃₀-Alkyl- oder C₂-C₃₀-Alkenyl-Reste bedeuten, die linear oder verzweigt und unsubstituiert oder durch Halogen, Hydroxy, Hydroxycarbonyl, C₄-C₁₅-Cycloalkyl oder C₁-C₁₅-Alkoxy substituiert sind, wobei der Alkenylrest ein- oder mehrfach ungesättigt sein kann.

Das Pigment (ii) ist vorzugsweise ein Diketopyrrolopyrrol der Formel (II) 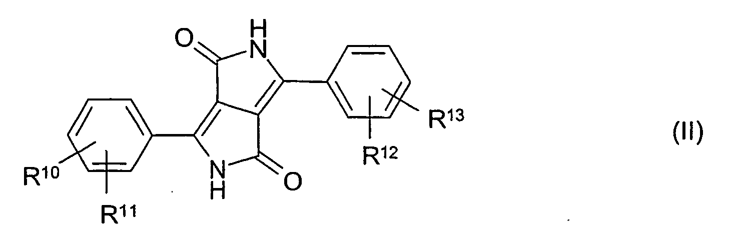 worin
R¹⁰, R¹¹, R¹² und R¹³ unabhängig voneinander Wasserstoff, Halogen, wie beispielsweise Chlor oder Brom, C₁-C₄-Alkyl, wie beispielsweise Methyl, Ethyl oder tert.-Butyl, C₁-C₄-Alkoxy, wie beispielsweise Methoxy, Cyano oder Phenyl bedeuten.

Besonders bevorzugt bedeuten
R¹¹ und R¹³ jeweils Wasserstoff, und
R¹⁰ und R¹² sind gleich oder verschieden und bedeuten Wasserstoff, Methyl, tert.-Butyl, Chlor, Cyano oder Phenyl.

Beispiele für Pigmente (ii) sind C.I. Pigment Orange 71, 73, 81, Pigment Red 254, 255, 264, 270, 272, Pigment Yellow 139, Pigment Violett 19, 37, Pigment Blue 15.

Bevorzugte Additive sind solche, worin
Z¹ und Z² gleich oder verschieden sind und C₂-C₁₈-Alkyl oder C₂-C₁₈-Alkenyl bedeuten,
Z³ C₂-C₁₈-Alkyl oder C₂-C₁₈-Alkenyl bedeuten,
R¹⁴ und R¹⁶ jeweils Wasserstoff, und
R¹⁵ und R¹⁷ Wasserstoff, Methyl, tert.-Butyl, Chlor oder Cyano bedeuten.

Bevorzugte Additive sind ferner solche, worin s gleich 0,2 bis 3,0, insbesondere 0,5 bis 2,5 ist.

Zum erfindungsgemäßen Einfärben werden zweckmäßigerweise 0,0001 bis 0,5 Gewichtsteile, insbesondere 0,0002 bis 0,05 Gewichtsteile, besonders bevorzugt 0,0005 bis 0,01 Gewichtsteile Pigment plus Additiv der Formel (I), bezogen auf ein Gewichtsteil des teilkristallinen Kunststoffs, eingesetzt. Im Falle, dass Masterbatche eingefärbt werden sollen, werden etwa 0,05 bis 0,5 Gewichtsteile Pigment plus Additiv der Formel (I), bezogen auf ein Gewichtsteil des teilkristallinen Kunststoffs, eingesetzt.

Zur Erzielung der gewünschten Verzugsfreiheit werden zweckmäßigerweise 0,001 bis 0,25 Gewichtsteile, insbesondere 0,01 bis 0,15 Gewichtsteile, besonders bevorzugt 0,02 bis 0,1 Gewichtsteile, des Additivs der Formel (I), bezogen auf ein Gewichtsteil Pigment, eingesetzt.

Die erfindungsgemäßen Additive lassen sich nach dem Fachmann bekannten Verfahren herstellen. Hierbei werden die entsprechend substituierten Nitrile analog dem in EP-A-0 094 911 beschriebenen Verfahren mit Bernsteinsäurediestern und starken Basen im geeigneten Lösungsmittel umgesetzt.

Neben den genannten Bestandteilen können noch 0 bis 0,5 Gewichtsteile, vorzugsweise 0,001 bis 0,1 Gewichtsteile, bezogen auf ein Gewichtsteil der Mischung aus Kunststoff und Pigment, mindestens eines weiteren Hilfsmittels aus der Gruppe der Tenside, nichtpigmentären und pigmentären Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, und Lichtstabilisatoren eingesetzt werden.
Als Tenside kommen anionische oder anionaktive, kationische oder kationaktive und nichtionische Substanzen oder Mischungen dieser Mittel in Betracht.
Als anionaktive Substanzen kommen beispielsweise Fettsäuretauride, FettsäureN-methyltauride, Fettsäureisethionate, Alkylphenylsulfonate, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, beispielsweise Palmitin-, Stearin- und Ölsäure; Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylaminopropylamin und p-Phenylendiamin in Betracht.
Besonders bevorzugt sind Harzseifen, d.h. Alkalisalze von Harzsäuren.
Als kationaktive Substanzen kommen beispielsweise quaternäre Ammoniumsalze, Fettaminoxalkylate, oxalkylierte Polyamine, Fettaminpolyglykolether, Fettamine, von Fettaminen oder Fettalkoholen abgeleitete Di- und Polyamine und deren Oxalkylate, von Fettsäuren abgeleitete Imidazoline, und Salze dieser kationenaktiven Substanzen, wie beispielsweise Acetate, in Betracht. Als nichtionogene Substanzen kommen beispielsweise Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkohol-alkylenoxid-Addukte und Alkylphenolpolyglykolether in Betracht.

Die in das erfindungsgemäße Verfahren eingesetzten Pigmente (ii) und Additive (iii) sowie gegebenenfalls die weiteren Hilfsmittel können in Form einer Pigmentzubereitung aus diesen Komponenten zum Einsatz kommen. In der Regel handelt es sich dabei um feste Systeme von rieselfähiger, pulverförmiger Beschaffenheit oder um Granulate. Möglich sind jedoch auch wässrige oder lösemittelhaltige Presskuchen, oder Kunststoffkonzentrate (Masterbatch).

Die Pigmentzubereitung kann hergestellt werden, indem man das Additiv oder eine Mischung dieser Additive und das Pigment oder eine Mischung von Pigmenten miteinander mischt oder während ihres Herstellungsprozesses aufeinander einwirken lässt. Der Herstellungsprozess beispielsweise eines Diketopyrrolopyrrolpigments umfasst dessen Synthese, Feinverteilung und/oder Dispergierung, beispielsweise durch Mahlung, Knetung oder Umfällen, gegebenenfalls Finish, sowie die Isolierung als Presskuchen oder als trockenes Granulat oder Pulver. Herstellprozesse anderer Basispigmente sind aus der Literatur bekannt. Beispielsweise kann das Additiv vor, während oder nach einem der üblichen Verfahrensschritte wie beispielsweise der Synthese, Feinverteilungsprozess, Finish, Isolation, Trocknung oder Pulverisierung zugegeben werden. So kann beispielsweise eine Zugabe bereits bei der Synthese zu feinen Teilchen führen. Selbstverständlich kann das Additiv auch in Teilportionen zu unterschiedlichen Zeiten zugegeben werden.

Die Zugabe des Additivs im Rahmen eines Feinverteilungsprozesses erfolgt beispielsweise vor oder während einer Salzknetung, vor oder während einer Trockenmahlung eines Rohpigments oder vor oder während einer Nassmahlung eines Rohpigments.
Gleichfalls bewährt hat sich die Zugabe des Additivs vor oder nach einem Finish des Basispigments in wässrigem oder wässrig-organischem Medium bei beliebigen pH-Werten oder in organischem Medium.
Das Additiv kann auch dem vorzugsweise wasserfeuchten Pigmentpresskuchen vor der Trocknung zugesetzt und eingearbeitet werden, wobei das Additiv selbst ebenfalls als Presskuchen vorliegen kann. Es ist weiterhin möglich, Trockenmischungen vom Pulver oder Granulat des Additivs mit dem Pulver oder Granulat des Pigments vorzunehmen, oder die Mischung bei einer Mahlung oder Pulverisierung des Pigments und des Additivs zu erzielen.

Die erfindungsgemäß erzielbare Verbesserung des Verzugs beruht vermutlich auf einer Modifizierung der Oberflächenstruktur der Basispigmente mit dem Additiv. So sind in einer Reihe von Fällen die Wirksamkeit des Additivs und die Qualität der damit erzeugten Pigmentzubereitungen abhängig vom Zeitpunkt der Zugabe des Additivs im Herstellungsprozess des Basispigments. Werden mehr als ein Additiv eingesetzt, so können sie gleichzeitig oder zu verschiedenen Zeitpunkten zugegeben werden oder können vor der Zugabe gemischt werden.
Die Wirksamkeit des Additivs kann auch von seiner Teilchengröße und Teilchenform sowie vom Umfang der belegbaren Pigmentoberfläche abhängen. Es kann vorteilhaft sein, das Additiv erst im in Aussicht genommenen Anwendungsmedium dem Pigment zuzufügen. Die jeweilige optimale Konzentration des Additivs muss durch orientierende Vorversuche ermittelt werden, da die Verbesserung der Eigenschaften der Pigmente nicht immer linear mit der Additivmenge einhergeht.

Im Sinne der vorliegenden Erfindung bedeutet der Begriff "verzugsfrei" einen im Vergleich zum unbehandelten Pigment deutlich herabgesetzten Verzug.

Unter teilkristallinen Kunststoffen werden solche verstanden, welche bei der Erstarrung kleine kristalline Kerne oder Aggregate bilden, manchmal auch nur in Gegenwart von Nukleierungsmitteln (zum Beispiel organischen Pigmenten). Teilkristalline Kunststoffe sind im allgemeinen thermoplastische hochmolekulare organische Materialien mit einem Molekulargewicht (M_{w}) von 10⁴ bis 10⁸ g/mol, bevorzugt 10⁵ bis 10⁷ g/mol, und einem Kristallinitätsgrad (X_{c}) von 10 bis 99,9 %, bevorzugt von 40 bis 99%, besonders bevorzugt von 80 bis 99 %. Bevorzugte teilkristalline Kunststoffe sind Homopolymere, Block- oder statistische Copolymere und Terpolymere von Ethylen, Propylen, Butylen, Styrol und/oder Divinylbenzol, insbesondere Polyolefine, wie Polyethylen (HDPE, MDPE, LDPE), Polypropylen, insbesondere Polyethylen hoher Dichte (HDPE), weiterhin auch Polystyrol, PVC, Polyester, wie Polyethylenterephthalat, Polyamide, wie Nylon 6 und Nylon 66, und thermoplastische lonomere.
Die teilkristallinen Kunststoffe können noch Additive in üblichen Mengen enthalten, wie z.B. Stabilisatoren, optische Aufheller, Füllmittel und Gleitmittel.

Die Formung des Kunststoffes kann durch ein Extrusions- oder Spritzgussverfahren erfolgen. Im Extrusionsverfahren wird im ersten Schritt die Polymermasse in einem Extruder plastifiziert und im Anschluss zur Formgebung durch ein geeignetes Werkzeug gedrückt. Nach diesem Verfahren lassen sich zum Beispiel verschiedene Profile, wie Flach-, Hohl-, offene- oder Voll-Profile herstellen. Im Spritzgussverfahren wird die geschmolzene, plastifizierte Polymermasse in eine Gussform, deren Hohlraum die Form und Größe des gewünschten Artikels aufweist, injiziert. Nach dem Erkalten der Masse wird die Gussform geöffnet und der fertige Artikel entnommen.

Die Prüfung der Verzugsbeeinflussung von Polyolefin durch die Pigmentzubereitung erfolgt an einem Spritzgussfertigteil in Form einer Platte in Anlehnung an DIN EN ISO 294-4. Nach der Alterung werden die Dimensionen der Platte (Länge, Breite) ausgemessen und so der Verzug ermittelt.

Pigmentzubereitungen, umfassend (ii) ein Diketopyrrolopyrrol-Pigment, vorzugsweise der vorstehend genannten Formel (II), insbesondere C.I. Pigment Red 254; und
(iii) 0,001 bis 0,25 Gewichtsteile, bezogen auf ein Gewichtsteil Pigment, eines Additivs der Formel (I)

Q⁅R]ₛ (I)

worin
Q ein Rest einer Diketopyrrolopyrrolverbindung der Formel (la) ist, 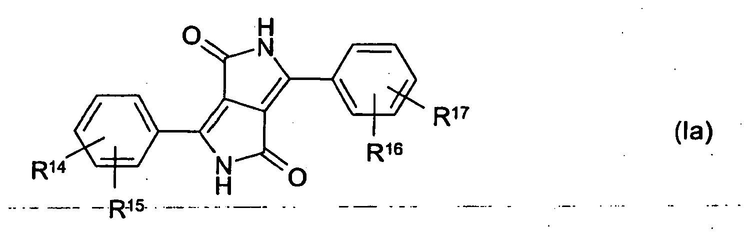 worin R¹⁴, R¹⁵, R¹⁶ und R¹⁷ unabhängig voneinander Wasserstoff, Halogen, C₁-C₄-Alkyl, C₁-C₄-Alkoxy, oder Cyano bedeuten;
s eine Zahl von 0,1 bis 4,0 darstellt; und
R ein Rest der Formel -CONZ¹Z² bedeutet,
worin
Z¹ und Z² gleich oder verschieden sind und Wasserstoff oder C₁-C₃₀-Alkyl- oder C₂-C₃₀-Alkenyl-Reste bedeuten, die linear oder verzweigt und unsubstituiert oder durch Halogen, Hydroxy, Hydroxycarbonyl, C₄-C₁₅-Cycloalkyl oder C₁-C₁₅-Alkoxy substituiert sind, wobei der Alkenylrest ein- oder mehrfach ungesättigt sein kann, mit der Maßgabe, dass Z¹ und Z² nicht gleichzeitig Wasserstoff bedeuten,
sind neu und ebenfalls Gegenstand der vorliegenden Erfindung.

Die erfindungsgemäßen Pigmentzubereitungen besitzen ein verbessertes Verzugsverhalten gegenüber in WO 2004/018566 beschriebenen Mischungen.

Zudem besitzen die erfindungsgemäßen Pigmentzubereitungen eine erhöhte Temperaturbeständigkeit gemäß DIN EN 12877 gegenüber in EP 0 952 183 A1 beschriebenen Mischungen.

In den folgenden Beispielen bedeuten Prozentangaben Gewichtsprozente, sofern nicht anders angegeben.

### Beispiel 1a

30 g 3-Cyanobenzoesäure werden in 300g Thionylchlorid 4 Stunden unter Rückfluss erhitzt. Das Thionylchlorid wird im Wasserstrahlvakuum abdestilliert und der Rückstand in 200ml 1,4-Dioxan aufgenommen. Nach der Zugabe von 16,6 g Pyridin und 18,3 g Methylbutylamin wird 45 Minuten bei Raumtemperatur gerührt. Die Lösung wird mit 200 ml Dichlormethan und 200ml 10 %iger wässriger NaOH ausgeschüttelt und das Produkt (III) aus der Dichlormethanphase isoliert.

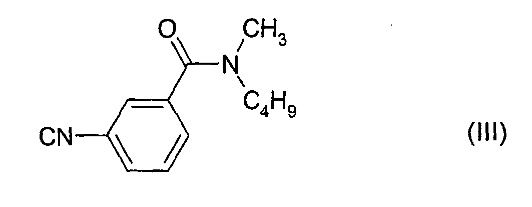

### Beispiel 1b

Additiv der Formel (IV) wird nach dem in EP-A-0 094 911 offenbarten Verfahren durch Umsetzung des Benzonitrils (III) mit Düsopropylsuccinat in Gegenwart von Natriumamylat in Amylalkohol hergestellt. Dabei werden 6,9 g Natrium in 200 g Amylalkohol in der Siedehitze umgesetzt. Im entstandenen Natriumamylat werden 43,6 g des Benzonitrils (III) gelöst und innerhalb 150 Minuten 20,2 g Düsopropylsuccinat bei 100°C zugetropft. Nach weiterem 6 stündigen Rühren bei 100°C wird auf 200 g Wasser gefällt, durch Wasserdampfdestillation der Amylalkohol entfernt und das Produkt (IV) durch Filtration isoliert und mit Wasser gewaschen.

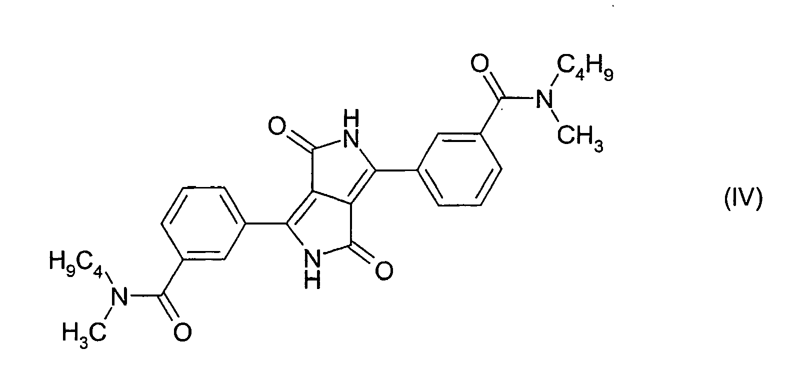

95 Teile P.R.254 (®Irgazin Rot BO) werden mit 5 Teilen Additiv der Formel (IV) vermischt. Mit der Pigmentzubereitung werden Polyethylen-Platten (600 g ^{®}Hostalen GC7260 und 0,6 g Pigmentzubereitung) pigmentiert und der Verzug in Anlehnung an DIN EN ISO 294-4 bestimmt.

Methode: Schwindungs-Prüfung organischer Pigmente in Polyethylen im Spritzguss. Als Formplatte dient eine rechteckige Platte mit Filmanguss und den Maßen 60 mal 60 mm. Die Auswertung erfolgt durch Vermessen längs und quer zur Spritzrichtung. Es werden jeweils 10 Spritzlinge hergestellt und vermessen, wobei der jeweilige Durchschnittswert Anwendung findet. Als Nullprobe werden 10 Spritzlinge aus nichtpigmentiertem Kunststoff verwendet. Dabei ist es wichtig, dass dieses Material exakt die gleiche Aufbereitung erfährt wie das pigmentierte System.

Die mit der erfindungsgemäßen Pigmentzubereitung pigmentierten Polyethylen-Platten weisen einen deutlich niedrigeren Verzug auf als obiges P.R.254 (®Irgazin Rot BO) ohne Additiv.

### Beispiel 2a

10 g 3-Cyanobenzoesäure werden in 100 g Thionylchlorid 4 Stunden unter Rückfluss erhitzt. Das Thionylchlorid wird im Wasserstrahlvakuum abdestilliert und der Rückstand in 100 ml 1,4-Dioxan aufgenommen. Nach der Zugabe von 5,4 g Pyridin und 16,87 g Dioctylamin wird 1 Stunden bei 80°C gerührt. Die Lösung wird mit 150 ml Dichlormethan und 100 ml 10 %iger wässriger NaOH ausgeschüttelt und das Produkt (V) aus der Dichlormethanphase isoliert.

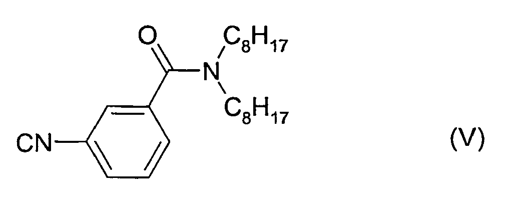

### Beispiel 2b

Additiv der Formel (VI) wird nach dem in EP-A-0 094 911 offenbarten Verfahren durch Umsetzung des Benzonitrils (V) mit Diisopropylsuccinat in Gegenwart von Natriumamylat in Amylalkohol analog Beispiel 1b hergestellt.

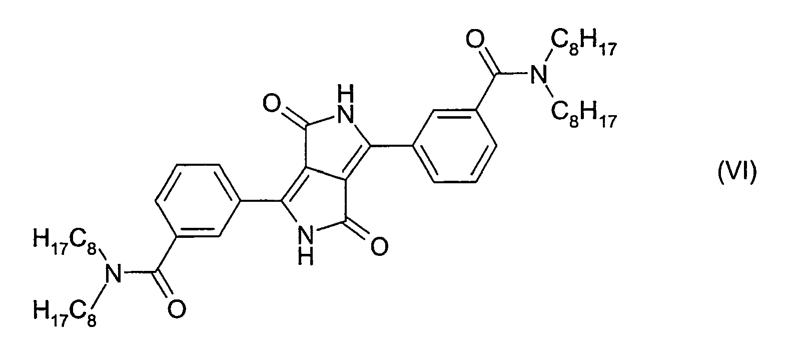

95 Teile P.R.254 (®Irgazin Rot BO) werden mit 5 Teilen Additiv der Formel (VI) vermischt.
Mit der Pigmentzubereitung werden Polyethylen-Platten (600 g ^{®}Hostalen GC7260 und 0,6 g Pigmentzubereitung) pigmentiert und der Verzug in Anlehnung an DIN EN ISO 294-4 bestimmt.

Die mit der erfindungsgemäßen Pigmentzubereitung pigmentierten Polyethylen-Platten weisen einen deutlich niedrigeren Verzug auf als obiges P.R.254 (^{®}Irgazin Rot BO) ohne Additiv.

### Beispiel 3a

10 g 3-Cyanobenzoesäure werden in 100 g Thionylchlorid 4 Stunden unter Rückfluss erhitzt. Das Thionylchlorid wird im Wasserstrahlvakuum abdestilliert und der Rückstand in 100 ml 1,4-Dioxan aufgenommen. Nach der Zugabe von 5,4 g Pyridin und 12,67 g Dicyclohexylamin wird 1 Stunde bei 80°C gerührt. Die Lösung wird mit 150ml Dichlormethan und 100 ml 10 %iger wässriger NaOH ausgeschüttelt und das Produkt (VII) aus der Dichlormethanphase isoliert.

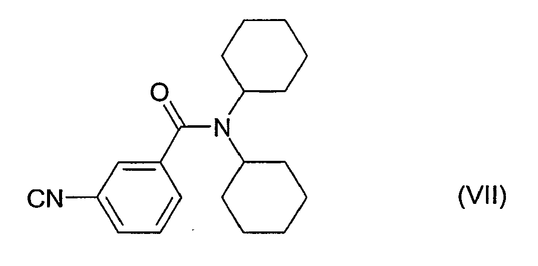

### Beispiel 3b

Additiv der Formel (VIII) wird nach dem in EP-A-0 094 911 offenbarten Verfahren durch Umsetzung des Benzonitrils (VII) mit Diisopropylsuccinat in Gegenwart von Natriumamylat in Amylalkohol analog Beispiel 1b hergestellt. 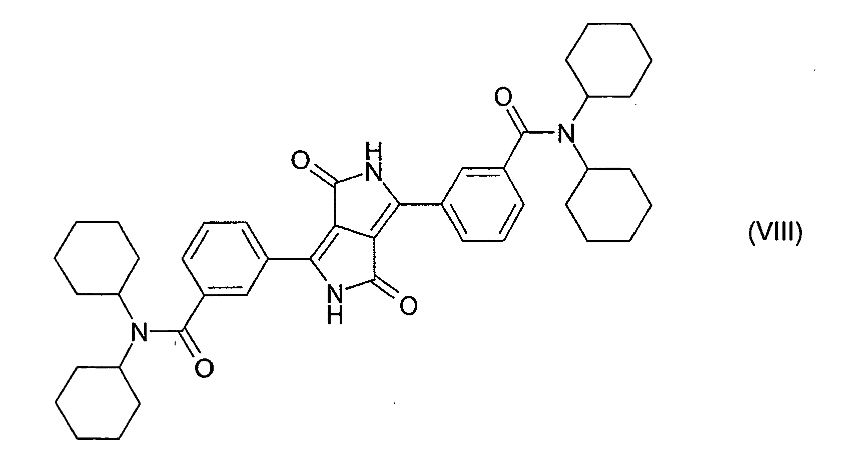 95 Teile P.R.254 (®Irgazin Rot BO) werden mit 5 Teilen Additiv der Formel (VIII) vermischt. Mit der Pigmentzubereitung werden Polyethylen-Platten (600 g ^{®}Hostalen GC7260 und 0,6 g Pigmentzubereitung) pigmentiert und der Verzug in Anlehnung an DIN EN ISO 294-4 bestimmt.
Die mit der erfindungsgemäßen Pigmentzubereitung pigmentierten Polyethylen-Platten weisen einen deutlich niedrigeren Verzug auf als obiges P.R.254 (®Irgazin Rot BO) ohne Additiv.

### Beispiel 4a

10 g 3-Cyanobenzoesäure werden in 100 g Thionylchlorid 4 Stunden unter Rückfluss erhitzt. Das Thionylchlorid wird im Wasserstrahlvakuum abdestilliert und der Rückstand in 100 ml 1,4-Dioxan aufgenommen. Nach der Zugabe von 5,4 g Pyridin und 12,95 g Dodecylamin wird 1 Stunde bei 80°C gerührt. Die Lösung wird mit 150ml Dichlormethan und 100 ml 10 %iger wässriger NaOH ausgeschüttelt und das Produkt (IX) aus der Dichlormethanphase isoliert.

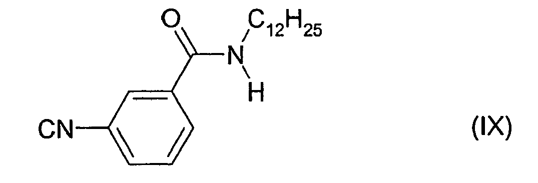

### Beispiel 4b

Additiv der Formel (X) wird nach dem in EP-A-0 094 911 offenbarten Verfahren durch Umsetzung des Benzonitrils (IX) mit Diisopropylsuccinat in Gegenwart von Natriumamylat in Amylakohol analog Beispiel 1 b hergestellt. 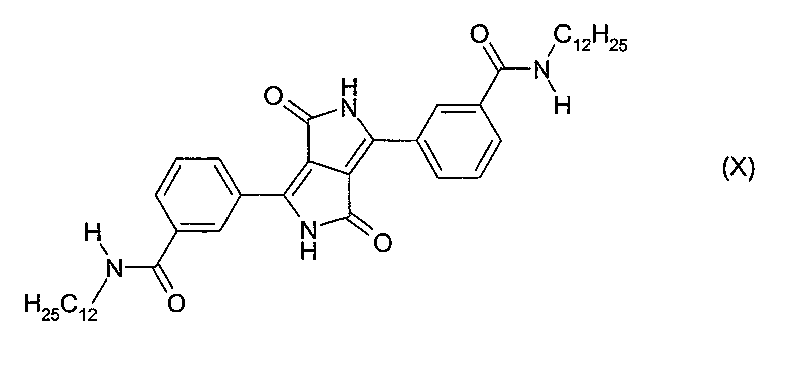 95 Teile P.R. 254 (®Irgazin Rot BO) werden mit 5 Teilen Additiv der Formel (X) vermischt. Mit der Pigmentzubereitung werden Polyethylen-Platten (600 g ^{®}Hostalen GC7260 und 0,6 g Pigmentzubereitung) pigmentiert und der Verzug in Anlehnung an DIN EN ISO 294-4 bestimmt.

Die mit der erfindungsgemäßen Pigmentzubereitung pigmentierten Polyethylen-Platten weisen einen deutlich niedrigeren Verzug auf als obiges P.R.254 (®Irgazin Rot BO) ohne Additiv.

### Beispiel 5

Additiv (XI) wird nach dem in EP-A-0 353 184 offenbarten Verfahren hergestellt. Hierzu werden 5 g 1,4-Diketo-3,6-bis-(4-bromphenyl)pyrrolo[3,4-c]-pyrrol, 7,81 g n-Methylbutylamin und 100 ml wasserfreies N-Methylpyrrolidon in einem 1000 ml Teflon-Autoklav unter Stickstoff vorgelegt. Die Suspension wird unter mäßigem Rühren innerhalb 2 Stunden auf 200°C erhitzt und für 24 Stunden bei dieser Reaktionstemperatur gehalten. Anschließend wird die Reaktionsmasse auf Raumtemperatur abgekühlt, der Autoklav geöffnet und die Suspension abgenutscht. Der Filterkuchen wird nacheinander mit N-Methylpyyrolidon, Methanol und heißem Wasser gewaschen und im Vakuumtrockenschrank bei 80°C für 24 Stunden getrocknet. 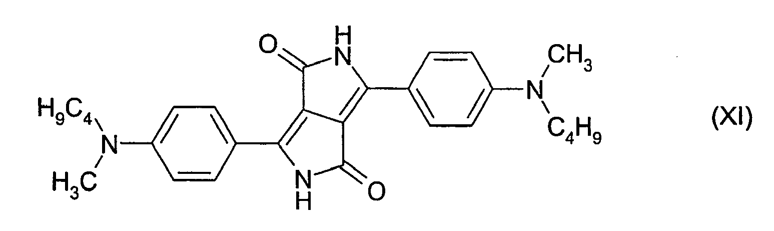 95 Teile P.R.254 (®Irgazin Rot BO) werden mit 5 Teilen Additiv der Formel (XI) vermischt. Mit der Pigmentzubereitung werden Polyethylen-Platten (600 g ^{®}Hostalen GC7260 und 0,6 g Pigmentzubereitung) pigmentiert und der Verzug in Anlehnung an DIN EN ISO 294-4 bestimmt.

Die mit der erfindungsgemäßen Pigmentzubereitung pigmentierten Polyethylen-Platten weisen einen deutlich niedrigeren Verzug auf als obiges P.R.254 (®Irgazin Rot BO) ohne Additiv.

### Beispiel 6a

10 g 3-Cyanobenzoesäure werden in 100 g Thionylchlorid 4 Stunden unter Rückfluss erhitzt. Das Thionylchlorid wird im Wasserstrahlvakuum abdestilliert und der Rückstand in 100 ml 1,4-Dioxan aufgenommen. Nach der Zugabe von 5,4 g Pyridin und 11,06 g Decanol wird 1 Stunde bei 80°C gerührt. Die Lösung wird mit 150 g Dichlormethan und 100 g 10 %iger wässriger NaOH ausgeschüttelt und das Produkt (XII) aus der Dichlormethanphase isoliert.

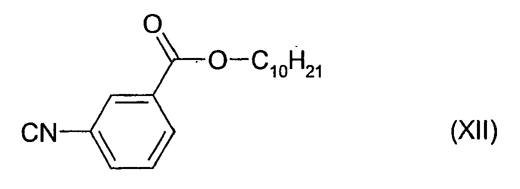

### Beispiel 6b

95 Teile P.R.254 (^{®}Irgazin Rot BO) werden mit 5 Teilen Additiv, erhältlich durch Umsetzung des Benzonitrils (XII) mit Diisopropylsuccinat in Gegenwart von Natriumamylat in Amylalkohol analog Beispiel 1 b vermischt.
Mit der Pigmentzubereitung werden Polyethylen-Platten (600 g ^{®}Hostalen GC7260 und 0,6 g Pigmentzubereitung) pigmentiert und der Verzug in Anlehnung an DIN EN ISO 294-4 bestimmt.

Die mit der erfindungsgemäßen Pigmentzubereitung pigmentierten Polyethylen-Platten weisen einen deutlich niedrigeren Verzug auf als obiges P.R.254 (^{®}Irgazin Rot BO) ohne Additiv.

### Beispiel 7 (Vergleich)

95 Teile P.R.254 (^{®}Irgazin Rot BO) werden mit 5 Teilen des in WO 2004/01566 beschriebenen Additivs der Formel (XIII), vermischt.

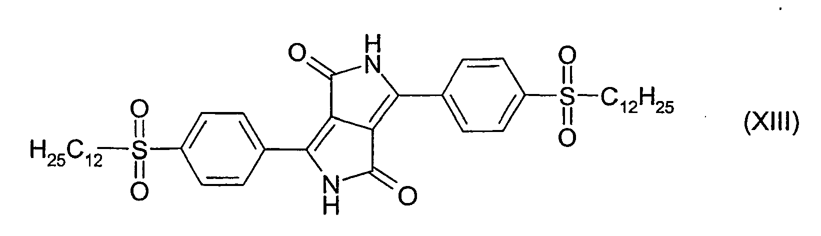

Mit der Pigmentzubereitung werden Polyethylen-Platten (600 g ^{®}Hostalen GC7260 und 0,6 g Pigmentzubereitung) pigmentiert und der Verzug in Anlehnung an DIN EN ISO 294-4 bestimmt.
Die pigmentierten Polyethylen-Platten weisen einen deutlich höheren Verzug auf gegenüber den in Beispiel 1 b mit den erfindungsgemäßen Pigmentzubereitung pigmentierten Polyethylen-Platten beschriebenen Mischungen.

### Beispiel 8 (Vergleich)

95 Teile P.R.254 (®Irgazin Rot BO) werden mit 5 Teilen des in EP 0 952 183 A1 beschriebenen Additivs der Formel (XIV), vermischt.

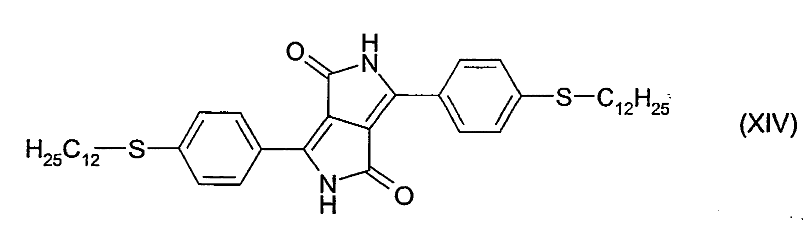

Das mit dem Additiv (XIV) additivierte P.R 254 zeigt eine geringere Temperaturbeständigkeit gemäß DIN EN 12877 gegenüber den mit der erfindungsgemäßen Pigmentzubereitung pigmentierten Polyethylen-Platten.

### Beispiel 9

95 Teile P.V.19 (®PV-Echtviolett ER) werden mit 5 Teilen Additiv der Formel (IV) (Beispiel 1 b) vermischt.
Mit der Pigmentzubereitung werden Polyethylen-Platten (600 g ^{®}Hostalen GC7260 und 0,6 g Pigmentzubereitung) pigmentiert und der Verzug in Anlehnung an DIN EN ISO 294-4 bestimmt.

Die mit der erfindungsgemäßen Pigmentzubereitung pigmentierten Polyethylen-Platten weisen einen niedrigeren Verzug auf als obiges P.V 19 (®PV-Echtviolett ER) ohne Additiv.

### Beispiel 10

95 Teile P.Y. 139 (®PV-Echtgelb H2R) werden mit 5 Teilen Additiv der Formel (IV) (Beispiel 1 b) vermischt.
Mit der Pigmentzubereitung werden Polyethylen-Platten (600 g ^{®}Hostalen GC7260 und 0,6 g Pigmentzubereitung) pigmentiert und der Verzug in Anlehnung an DIN EN ISO 294-4 bestimmt.
Die mit der erfindungsgemäßen Pigmentzubereitung pigmentierten Polyethylen-Platten weisen einen niedrigeren Verzug auf als obiges P.Y. 139 (®PV-Echtgelb H2R) ohne Additiv.

## Patentansprüche

1. Verfahren zur Färbung von teilkristallinen Kunststoffen in der Masse, **dadurch gekennzeichnet, dass**
(i) ein teilkristalliner Kunststoff aus der Gruppe der Homopolymere, Terpolymere oder Copolymere von Ethylen, Propylen, Butylen, Styrol und/oder Divinylbenzol, der Polyester, der Polyamide und der thermoplastischen lonomere;
(ii) ein Pigment aus der Gruppe der Diketopyrrolopyrrol-, Chinacridon-, Disazokondensations-, Isoindolinon- und lsoindolin-Pigmente; und
(iii) 0,001 bis 0,25 Gewichtsteile, bezogen auf ein Gewichtsteil Pigment, eines Additivs der Formel (I)
Q⁅R]ₛ (I)
geformt werden,
worin
Q ein Rest einer Diketopyrrolopyrrolverbindung der Formel (la) ist, 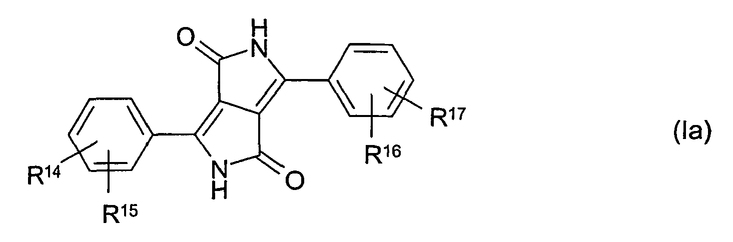 worin R¹⁴ , R¹⁵, R¹⁶ und R¹⁷ unabhängig voneinander Wasserstoff, Halogen, C₁-C₄-Alkyl, C₁-C₄-Alkoxy, oder Cyano bedeuten;
s eine Zahl von 0,1 bis 4,0 darstellt; und
R ein Rest der Formeln -CONZ¹Z², -NZ¹Z² oder -COOZ³ bedeutet,
worin
Z¹ und Z² gleich oder verschieden sind und Wasserstoff oder C₁-C₃₀-Alkyl- oder C₂-C₃₀-Alkenyl-Reste bedeuten, die linear oder verzweigt und unsubstituiert oder durch Halogen, Hydroxy, Hydroxycarbonyl, C₄-C₁₅-Cycloalkyl oder C₁-C₁₅-Alkoxy substituiert sind, wobei der Alkenylrest ein- oder mehrfach ungesättigt sein kann, mit der Maßgabe, dass Z¹ und Z² nicht gleichzeitig Wasserstoff bedeuten,
Z³ Wasserstoff, Ammonium, Alkylammonium, Alkalimetall, C₁-C₃₀-Alkyl- oder C₂-C₃₀-Alkenyl-Reste bedeuten, die linear oder verzweigt und unsubstituiert oder durch Halogen, Hydroxy, Hydroxycarbonyl, C₄-C₁₅-Cycloalkyl oder C₁-C₁₅-Alkoxy substituiert sind, wobei der Alkenylrest ein- oder mehrfach ungesättigt sein kann.

2. Verfahren nach Anspruch 1, **dadurch gekennzeichnet, dass** das Pigment (ii) ein Diketopyrrolopyrrol der Formel (II) ist 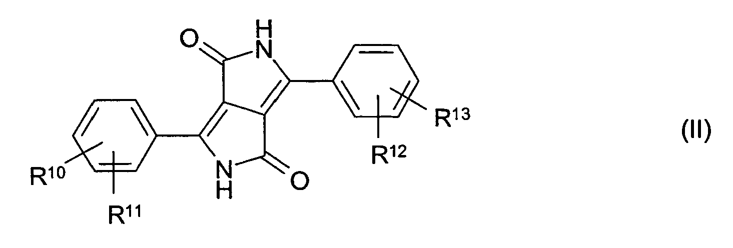 worin
R¹⁰, R^{11,} R¹² und R¹³ unabhängig voneinander Wasserstoff, Halogen, C₁-C₄-Alkyl, C₁-C₄-Alkoxy, Cyano oder Phenyl bedeuten.

3. Verfahren nach Anspruch 2, **dadurch gekennzeichnet, dass**
R¹¹ und R¹³ jeweils Wasserstoff, und
R¹⁰ und R¹² gleich oder verschieden sind und Wasserstoff, Methyl, tert.-Butyl, Chlor, Cyano oder Phenyl bedeuten.

4. Verfahren nach mindestens einem der Ansprüche 1 bis 3, **dadurch gekennzeichnet, dass** das Pigment (ii) C.I. Pigment Orange 71, 73, 81, Pigment Red 254, 255, 264, 270, 272, Pigment Yellow 139, Pigment Violet 19, 37, oder Pigment Blue 15 ist.

5. Verfahren nach mindestens einem der Ansprüche 1 bis 4, **dadurch**
**gekennzeichnet, dass**
Z¹ und Z² gleich oder verschieden sind und C₂-C₁₈-Alkyl oder C₂-C₁₈-Alkenyl bedeuten,
Z³ C₂-C₁₈-Alkyl oder C₂-C₁₈-Alkenyl bedeuten,
R¹⁴ und R¹⁶ jeweils Wasserstoff, und
R¹⁵ und R¹⁷ Wasserstoff, Methyl, tert.-Butyl, Chlor oder Cyano bedeuten.

6. Verfahren nach mindestens einem der Ansprüche 1 bis 5, **dadurch gekennzeichnet, dass** s gleich 0,5 bis 2,5 ist.

7. Verfahren nach mindestens einem der Ansprüche 1 bis 6, **dadurch gekennzeichnet, dass** 0,0001 bis 0,5 Gewichtsteile Pigment plus Additiv der Formel (I), bezogen auf ein Gewichtsteil des teilkristallinen Kunststoffs, eingesetzt werden.

8. Verfahren nach mindestens einem der Ansprüche 1 bis 7, **dadurch gekennzeichnet, dass** 0,02 bis 0,1 Gewichtsteile des Additivs der Formel (I), bezogen auf ein Gewichtsteil Pigment, eingesetzt werden.

9. Verfahren nach mindestens einem der Ansprüche 1 bis 8, **dadurch gekennzeichnet, dass** bis zu 0,5 Gewichtsteile, bezogen auf ein Gewichtsteil der Kombination aus Kunststoff und Pigment, mindestens eines weiteren Hilfsmittels aus der Gruppe der Tenside, nichtpigmentären und pigmentären Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, und Lichtstabilisatoren eingesetzt werden.

10. Verfahren nach mindestens einem der Ansprüche 1 bis 9, **dadurch gekennzeichnet, dass** der teilkristalline Kunststoff HDPE, MDPE, LDPE, Polypropylen, PVC, PET, Nylon 6 oder Nylon 66 ist.

11. Verfahren nach mindestens einem der Ansprüche 1 bis 10, **dadurch gekennzeichnet, dass** die besagten Komponenten durch ein Extrusions- oder Spritzguss-Verfahren geformt werden.

12. Pigmentzubereitung, umfassend
(ii) ein Diketopyrrolopyrrol-Pigment, und
(iii) 0,001 bis 0,25 Gewichtsteile, bezogen auf ein Gewichtsteil Pigment, eines Additivs der Formel (I)
Q⁅R]ₛ (I)
worin
Q ein Rest einer Diketopyrrolopyrrolverbindung der Formel (la) ist, 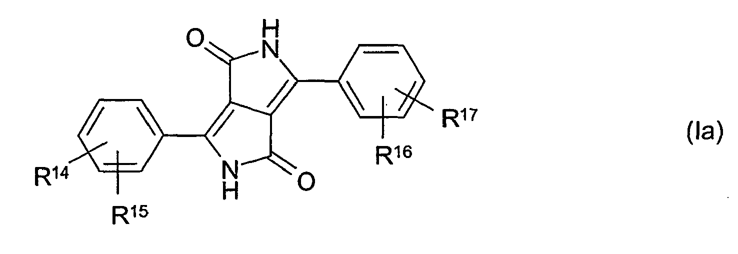 worin R¹⁴ , R¹⁵, R¹⁶ und R¹⁷ unabhängig voneinander Wasserstoff, Halogen, C₁-C₄-Alkyl, C₁-C₄-Alkoxy, oder Cyano bedeuten;
s eine Zahl von 0,1 bis 4,0 darstellt; und
R ein Rest der Formel -CONZ¹Z² bedeutet,
worin
Z¹ und Z² gleich oder verschieden sind und Wasserstoff oder C₁-C₃₀-Alkyl- oder C₂-C₃₀-Alkenyl-Reste bedeuten, die linear oder verzweigt und unsubstituiert oder durch Halogen, Hydroxy, Hydroxycarbonyl, C₄-C₁₅-Cycloalkyl oder C₁-C₁₅-Alkoxy substituiert sind, wobei der Alkenylrest ein- oder mehrfach ungesättigt sein kann, mit der Maßgabe, dass Z¹ und Z² nicht gleichzeitig Wasserstoff bedeuten.

13. Pigmentzubereitung nach Anspruch 12, **dadurch gekennzeichnet, dass** das Diketopyrrolopyrrol-Pigment (ii) C.I. Pigment Red 254 ist.

## Claims

1. A process for mass coloration of partly crystalline plastics, which comprises forming
(i) a partly crystalline plastic from the group of the homopolymers, terpolymers or copolymers of ethylene, propylene, butylene, styrene and/or divinylbenzene, of the polyesters, of the polyamides and of the thermoplastic ionomers;
(ii) a pigment from the group of the diketopyrrolopyrrole, quinacridone, disazocondensation, isoindolinone and isoindoline pigments; and
(iii) 0.001 to 0.25 part by weight, based on one part by weight of pigment, of an additive of the formula (I)
Q⁅R]ₛ (I)
where
Q is a residue of a diketopyrrolopyrrole compound of the formula (Ia) 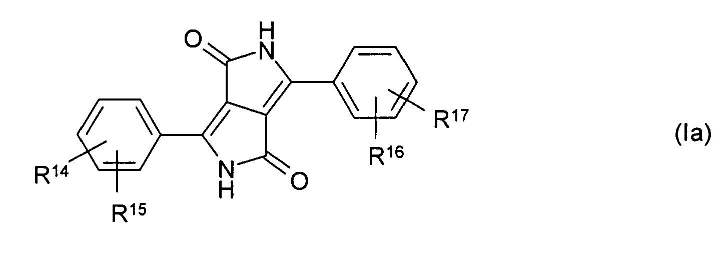 where R¹⁴, R¹⁵ , R¹⁶ and R¹⁷ are independently hydrogen, halogen, C₁-C₄-alkyl, C₁-C₄-alkoxy, or cyano;
s is from 0.1 to 4.0; and
R is a radical of the formulae -CONZ¹Z², -NZ¹Z² or - COOZ³,
where
Z¹ and Z² are the same or different and represent hydrogen or C₁-C₃₀-alkyl or C₂-C₃₀-alkenyl radicals, which may be linear or branched and unsubstituted or halogen, hydroxyl, hydroxycarbonyl, C₄-C₁₅-cycloalkyl or C₁-C₁₅-alkoxy substituted, alkenyl being mono- or polyunsaturated, with the proviso that Z¹ and Z² are not both hydrogen,
Z³ represents hydrogen, ammonium, alkylammonium, alkali metal, C₁-C₃₀-alkyl or C₂-C₃₀-alkenyl radicals, which may be linear or branched and unsubstituted or halogen, hydroxyl, hydroxycarbonyl, C₄-C₁₅-cycloalkyl or C₁-C₁₅-alkoxy substituted, alkenyl being mono- or polyunsaturated.

2. A process according to claim 1, wherein said pigment (ii) is a diketopyrrolopyrrole of the formula (II) 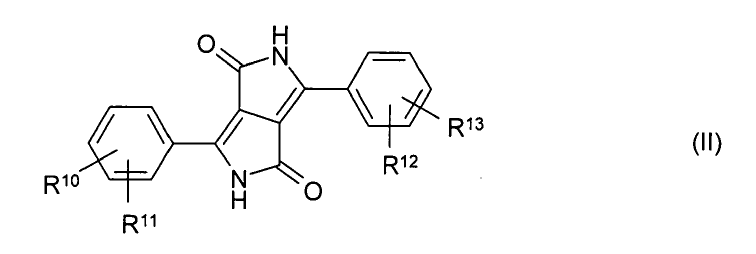 where
R¹⁰, R¹¹, R¹² and R¹³ are independently hydrogen, halogen, C₁-C₄-alkyl, C₁-C₄-alkoxy, cyano or phenyl.

3. A process according to claim 2, wherein
R¹¹ and R¹³ are each hydrogen and
R¹⁰ and R¹², which are the same or different, are each hydrogen, methyl, tert-butyl, chlorine, cyano or phenyl.

4. A process according to at least one of claims 1 to 3, wherein said pigment (ii) is C.I. Pigment Orange 71, 73, 81, Pigment Red 254, 255, 264, 270, 272, Pigment Yellow 139, Pigment Violet 19, 37, or Pigment Blue 15.

5. A process according to at least one of claims 1 to 4, wherein
Z¹ and Z², which are the same or different, are each C₂-C₁₈-alkyl or C₂-C₁₈-alkenyl,
Z³ is C₂-C₁₈-alkyl or C₂-C₁₈-alkenyl,
R¹⁴ and R¹⁶ are each hydrogen, and
R¹⁵ and R¹⁷ are each hydrogen, methyl, tert-butyl, chlorine or cyano.

6. A process according to at least one of claims 1 to 5, wherein s is from 0.5 to 2.5.

7. A process according to at least one of claims 1 to 6, which utilizes 0.0001 to 0.5 part by weight of pigment plus additive of the formula (I), based on one part by weight of the partly crystalline plastic.

8. A process according to at least one of claims 1 to 7, which utilizes 0.02 to 0.1 part by weight of the additive of the formula (I), based on one part by weight of pigment.

9. A process according to at least one of claims 1 to 8, which utilizes up to 0.5 part by weight, based on one part by weight of the combination of plastic and pigment, of at least one further auxiliary from the group of the surfactants, pigmentary and nonpigmentary dispersants, fillers, standardizers, resins, waxes, defoamers, antidust agents, extenders, shading colorants, preservatives, drying retarders, rheology control additives, wetting agents, antioxidants, UV absorbers, and light stabilizers.

10. A process according to at least one of claims 1 to 9, wherein the partly crystalline plastic is HDPE, MDPE, LDPE, polypropylene, PVC, PET, nylon 6 or nylon 66.

11. A process according to at least one of claims 1 to 10, wherein said components are formed by an extrusion or injection molding process.

12. A pigment preparation comprising
(ii) a diketopyrrolopyrrole pigment and
(iii) 0.001 to 0.25 part by weight, based on one part by weight of pigment, of an additive of the formula (I)
Q⁅R]ₛ (I)
where
Q is a residue of a diketopyrrolopyrrole compound of the formula (Ia) 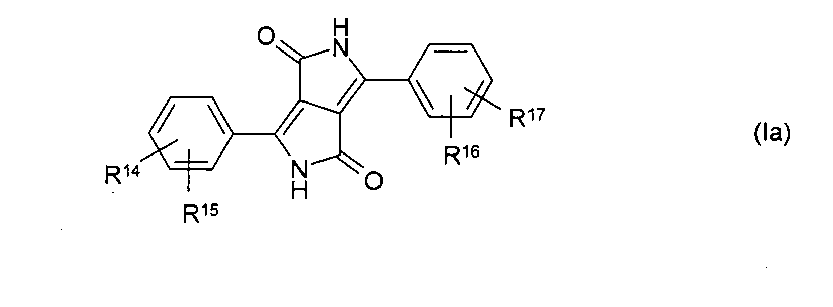 where R¹⁴, R¹⁵, R¹⁶ and R¹⁷ are independently hydrogen, halogen, C₁-C₄-alkyl , C₁-C₄-alkoxy, or cyano;
s is from 0.1 to 4.0; and
R is a radical of the formula -CONZ¹Z²,
where
Z¹ and Z² are the same or different and represent hydrogen or C₁-C₃₀-alkyl or C₂-C₃₀-alkenyl radicals, which may be linear or branched and unsubstituted or halogen, hydroxyl, hydroxycarbonyl, C₄-C₁₅-cycloalkyl or C₁-C₁₅-alkoxy substituted, alkenyl being mono- or polyunsaturated, with the proviso that Z¹ and Z² are not both hydrogen.

13. A pigment preparation according to claim 12, wherein said diketopyrrolopyrrole pigment (ii) is C.I Pigment Red 254.

## Revendications

1. Procédé pour la coloration dans la masse de matières plastiques partiellement cristallines, **caractérisé en ce qu'**on moule
(i) une matière plastique partiellement cristalline, choisie dans le groupe des homopolymères, terpolymères ou copolymères d'éthylène, propylène, butylène, styrène et/ou divinylbenzène, des polyesters, des polyamides et des ionomères thermoplastiques ;
(ii) un pigment choisi dans le groupe des pigments dicétopyrrolopyrrole, quinacridone, de condensation disazoïque, iso-indolinone et isoindoline ; et
(iii) 0,001 à 0,25 partie en poids, par rapport à une partie en poids de pigment, d'un additif de formule (I)
Q⁅R]ₛ (I)
dans laquelle
Q est un reste d'un composé dicétopyrrolopyrrole de formule (Ia), 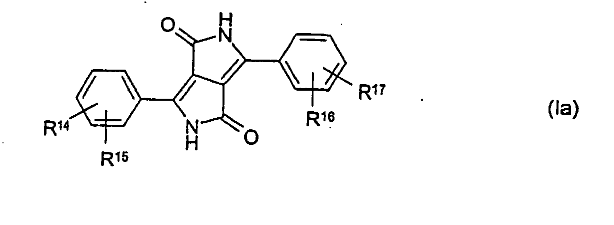 dans laquelle R¹⁴, R¹⁵, R¹⁶ et R¹⁷ représentent, indépendamment les uns des autres, un atome d'hydrogène ou d'halogène, un groupe alkyle en C₁-C₄, alcoxy en C₁-C₄ ou cyano ;
s représente un nombre allant de 0,1 à 4,0 ; et
R représente un radical de formules -CONZ¹Z², -NZ¹Z²ou - COOZ³ ,
dans lesquelles
Z¹ et Z² sont identiques ou différents et représentent un atome d'hydrogène ou des radicaux alkyle en C₁-C₃₀ ou alcényle en C₂-C₃₀ qui sont linéaires ou ramifiés et non substitués ou substitués par halogène, hydroxy, hydroxycarbonyle, cycloalkyle en C₄-C₁₅ ou alcoxy en C₁-C₁₅, le radical alcényle pouvant être une ou plusieurs fois insaturé, étant entendu que Z¹ et Z² ne représentent pas simultanément un atome d'hydrogène,
Z³ représente un atome d'hydrogène, un ion ammonium ou alkylammonium, un atome de métal alcalin, des radicaux alkyle en C₁-C₃₀ ou alcényle en C₂-C₃₀ qui sont linéaires ou ramifiés et non substitués ou substitués par halogène, hydroxy, hydroxycarbonyle, cycloalkyle en C₄-C₁₅ ou alcoxy en C₁-C_{15,} le radical alcényle pouvant être une ou plusieurs fois insaturé.

2. Procédé selon la revendication 1, **caractérisé en ce que** le pigment (ii) est un dicétopyrrolopyrrole de formule (II) 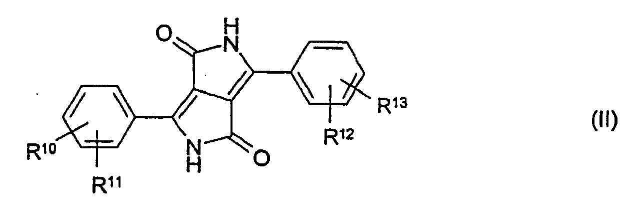 dans laquelle
R¹⁰, R¹¹ R¹² et R¹³ représentent, indépendamment les uns des autres, un atome d'hydrogène ou d'halogène, un groupe alkyle en C₁-C₄, alcoxy en C₁-C₄, cyano ou phényle.

3. Procédé selon la revendication 2, **caractérisé en ce que**
R¹¹ et R¹³ représentent chacun un atome d'hydrogène, et R¹⁰ et R¹² sont identiques ou différents et représentent un atome d'hydrogène ou de chlore ou le groupe méthyle, tert-butyle, cyano ou phényle.

4. Procédé selon au moins l'une des revendications 1 à 3, **caractérisé en ce que** le pigment (ii) est le pigment C.I. Pigment Orange 71, 73, 81, Pigment Red 254, 255, 264, 270, 272, Pigment Yellow 139, Pigment Violet 19, 37 ou Pigment Blue 15.

5. Procédé selon au moins l'une des revendications 1 à 4, **caractérisé en ce que**
Z¹ et Z² sont identiques ou différents et représentent des radicaux alkyle en C₂-C₁₈ ou alcényle en C₂-C₁₈,
Z³ représente un groupe alkyle en C₂-C₁₈ ou alcényle en C₂-C₁₈,
R¹⁴ et R¹⁶ représentent chacun un atome d'hydrogène, et
R¹⁵ et R¹⁷ représentent un atome d'hydrogène ou de chlore ou le groupe méthyle, tert-butyle ou cyano.

6. Procédé selon au moins l'une des revendications 1 à 5, **caractérisé en ce que** s va de 0,5 à 2,5.

7. Procédé selon au moins l'une des revendications 1 à 6, **caractérisé en ce qu'**on utilise de 0,0001 à 0,5 partie en poids de pigment plus additif de formule (I), par rapport à une partie en poids de la matière plastique partiellement cristalline.

8. Procédé selon au moins l'une des revendications 1 à 7, **caractérisé en ce qu'**on utilise de 0,02 à 0,1 partie en poids de l'additif de formule (I), par rapport à une partie en poids de pigment.

9. Procédé selon au moins l'une des revendications 1 à 8, **caractérisé en ce qu'**on utilise jusqu'à 0,5 partie en poids, par rapport à une partie en poids de l'association de matière plastique et pigment, d'au moins un autre adjuvant choisi dans le groupe des tensioactifs, des dispersants pigmentaires ou non pigmentaires, des charges, des fixateurs, des résines, des cires, des antimousses, des agents anti-poussière, des diluants, des agents colorants pour le nuançage, des conservateurs, des ralentisseurs de séchage, des additifs pour le réglage de la rhéologie, des agents mouillants, des antioxydants, des absorbeurs UV et des photostabilisants.

10. Procédé selon au moins l'une des revendications 1 à 9, **caractérisé en ce que** la matière plastique partiellement cristalline est le HDPE, le MDPE, le LDPE, le polypropylène, le PVC, le PET, le Nylon 6 ou le Nylon 66.

11. Procédé selon au moins l'une des revendications 1 à 10, **caractérisé en ce que** lesdits composants sont moulés par un procédé d'extrusion ou de moulage par injection.

12. Préparation de pigment, comprenant
(ii) un pigment dicétopyrrolopyrrole, et
(iii) 0,001 à 0,25 parties en poids, par rapport à une partie en poids de pigment, d'un additif de formule (I)
Q⁅R]ₛ (I)
dans laquelle
Q est un reste d'un composé dicétopyrrolopyrrole de formule (Ia), 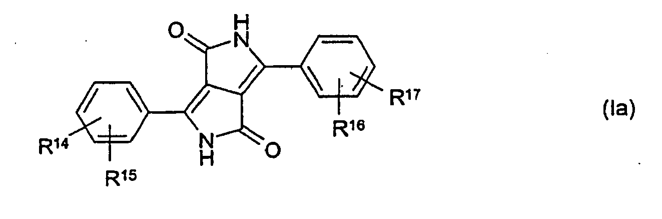 dans laquelle R¹⁴, R¹⁵, R¹⁶ et R¹⁷ représentent, indépendamment les uns des autres, un atome d'hydrogène ou d'halogène, un groupe alkyle en C₁-C₄, alcoxy en C₁-C₄ ou cyano ;
s représente un nombre allant de 0,1 à 4,0 ; et
R représente un radical de formule -CONZ¹Z²,
dans laquelle
Z¹ et Z² sont identiques ou différents et représentent un atome d'hydrogène ou des radicaux alkyle en C₁-C₃₀ ou alcényle en C₂-C₃₀ qui sont linéaires ou ramifiés et non substitués ou substitués par halogène, hydroxy, hydroxycarbonyle, cycloalkyle en C₄-C₁₅ ou alcoxy en C₁-C₁₅, le radical alcényle pouvant être une ou plusieurs fois insaturé, étant entendu que Z¹ et Z² ne représentent pas simultanément un atome d'hydrogène,

13. Préparation de pigment selon la revendication 12, **caractérisée en ce que** le pigment dicétopyrrolopyrrole (ii) est le pigment C.I. Pigment Red 254.
